# EUROPÄISCHE PATENTSCHRIFT

(11) **EP 1 391 145 B1**
(45) Veröffentlichungstag und Bekanntmachung des Hinweises auf die Patenterteilung: **14.05.2008**
(21) Anmeldenummer: 03018509.4
(22) Anmeldetag: 16.08.2003
(51) Int. Cl.: A01B 21/08

(54) **Bodenbearbeitungsgerät**
Soil working apparatus
Appareil pour le travail du sol

(30) Priorität: 23.08.2002 DE 10238644
(43) Veröffentlichungstag der Anmeldung: 25.02.2004
(73) Patentinhaber: Rabe Agri GmbH, 49152 Bad Essen (DE)
(72) Erfinder: Janköster, Knud, Dipl.-Ing., 49152 Bad Essen (DE); Warnecke, Christoph, Dipl.-Ing., 51580 Reichshof-Hamig (DE); von Allwörden, Wilhelm, Dipl.-Ing., 49152 Bad Essen (DE)
(74) Vertreter: Tappe, Hartmut

(56) Entgegenhaltungen:
- DE-A- 19 630 079
- FR-A- 2 649 281
- US-A- 2 785 619
- US-A- 5 207 279
- US-A- 5 590 721

## Beschreibung

Die Erfindung betrifft ein Bodenbearbeitungsgerät gemäß des Oberbegriffs des Patentanspruchs 1.

Ein derartiges Bodenbearbeitungsgerät wird beispielsweise in der DE 100 28 930 A1 vorgeschlagen, welches in seinem grundsätzlichen Aufbau aus einem Fahrwerk und einem Rahmen mit daran angebrachten Bodenbearbeitungswerkzeugen besteht.

Der Erfindung liegt die Aufgabe zugrunde, in einfacher Weise ein Bodenbearbeitungsgerät zu schaffen, welches verstopfungsfrei arbeitet und eine ebene Oberfläche hinterläßt. Diese Aufgabe wird erfindungsgemäß durch die kennzeichnenden Merkmale des Patentanspruchs 1 gelöst. Die Unteransprüche zeigen weitere Merkmale der Erfindung.

Das erfindungsgemäße Bodenbearbeitungsgerät zeichnet sich dadurch aus, daß sich hinter dem zusammenwerfenden Bereich der Scheibensätze ein Zinken zur Lockerung bzw. zum flachen Abschneiden und zum Mischen des Bodens befindet und daß am Scheibensatz jeweils eine gerade Sechscheibe montiert ist. Eine kurze Bauweise der vorlaufenden V-förmig angeordneten Scheibensätze wird erreicht, indem die maximale Arbeitsbreite der in einem vorzugsweisen Anstellwinkel von 3° bis 5° angeordneten Scheibensätze ca. 1,50 Meter beträgt. Bei Arbeitsbreiten von über 3 Meter ist eine W-Anordnung vorteilhaft. Eine verkürzte Bauweise ist durch einzeln gelagerte Scheiben möglich, indem die Hohlscheiben einzeln an einem Träger mit einem vorzugsweisen Anstellwinkel von 3° bis 5° angebracht sind. Das Bodenbearbeitungsgerät benötigt dadurch bei den vorlaufenden Hohlscheiben nur einen zusammenwerfenden Bereich mit jeweils einer links bzw. rechts werfenden geraden Sechscheibe und mittig dahinter angeordnet einen Zinken. Durch diese Anordnung ist eine ganzflächige flache Bodenbearbeitung möglich.

Weitere Vorteile und Merkmale der Erfindung ergeben sich aus den Unteransprüchen, den Beispielbeschreibungen und den Zeichnungen. Dabei zeigen die nachfolgenden Zeichnungen
- Fig. 1: ein erfindungsgemäßes Bodenbearbeitungsgerät in Seitenansicht
- Fig. 2: Bodenbearbeitungsgerät in Draufsicht
- Fig. 3: Teilansicht vom Bodenbearbeitungsgerät in Vorderansicht
- Fig. 4: Teilansicht vom Bodenbearbeitungsgerät in Draufsicht
- Fig. 5: Teilansicht vom Bodenbearbeitungsgerät mit W-förmig angeordneten Scheibensätzen
- Fig. 6: Teilansicht vom Bodenbearbeitungsgerät mit einzeln gelagerten Hohlscheibenelementen bzw. Sechscheibenelementen in Draufsicht
- Fig. 7: Teilansicht vom Bodenbearbeitungsgerät mit einzeln gelagerten Sechscheibenelementen in Draufsicht, nicht gemäß der Erfindung.

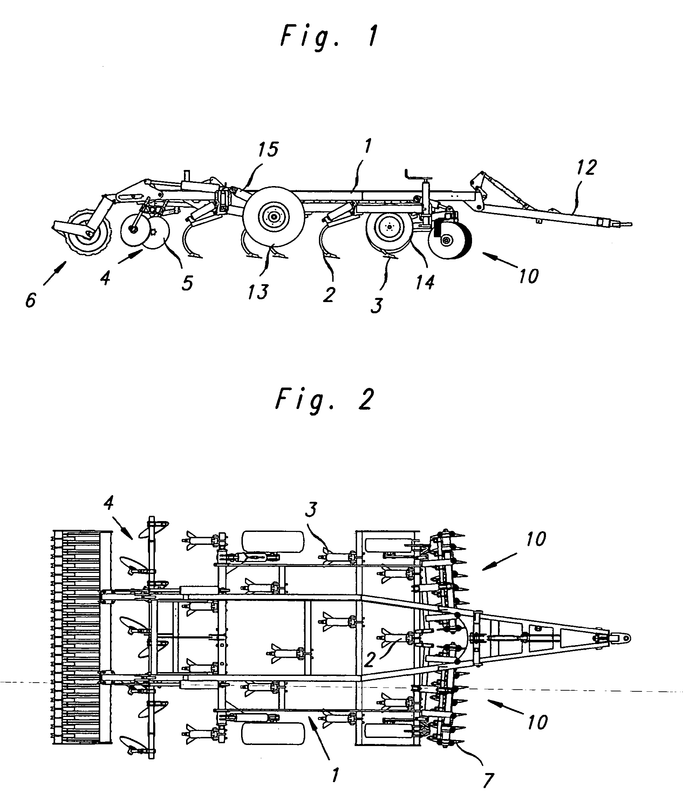

Das Bodenbearbeitungsgerät in den **Fig. 1** **+ 2** besteht aus den Hauptbaugruppen Rahmen **1,** Scheibensatz **10,** Zinken **2,** Einebnungselmenente **4** mit Hohlscheiben **5,** Walze **6**, Deichsel **12**, Fahrwerk **13** und Stützräder **14**.

Die Arbeitstiefe der Zinken **2** wird über die Stützräder **14** und über die Walze **6** gesteuert.

Zum Transport ist das Fahrwerk **13** schwenkbar am Rahmen angebracht. Der Hydraulikzylinder **15** drückt das Fahrwerk auf den Boden. Dabei werden die Bodenbearbeitungswerkzeuge vom Boden abgehoben.

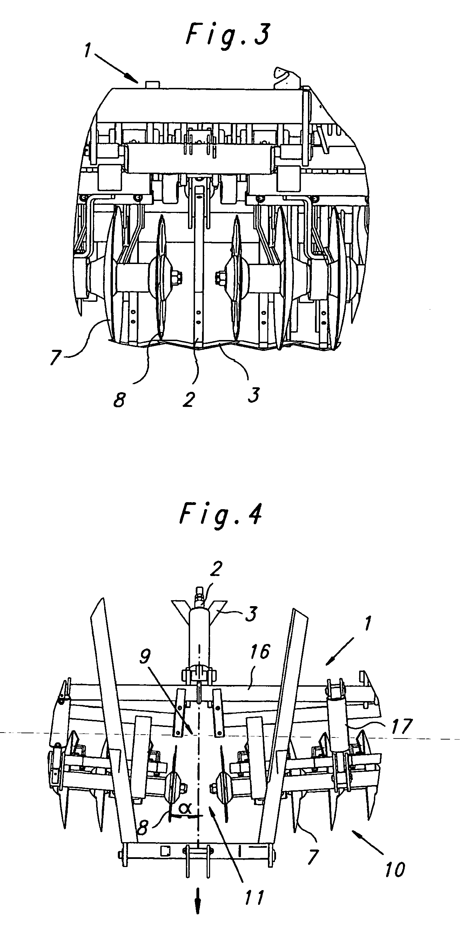

In den Fig. **3** **+ 4** ist die Anordnung der vorlaufenden Scheibensätze **10** mit den Hohlscheiben **7** und den Sechscheiben **8** dargestellt sowie der mittig hinter dem zusammenwerfenden Bereich **9** angeordnete Zinken **2** mit Gänsefußschar **3**.

Die Scheibensätze **10** stehen vor dem vorderen Zinkenbalken **16** im Winkel **α** zur

Fahrtrichtung. Mit einem oder mehreren Stellzylindern **17**, vorzugsweise Hydraulikzylinder, kann die Arbeitstiefe der Scheibensätze **10** unabhängig von der Zinkenarbeitstiefe verändert werden.

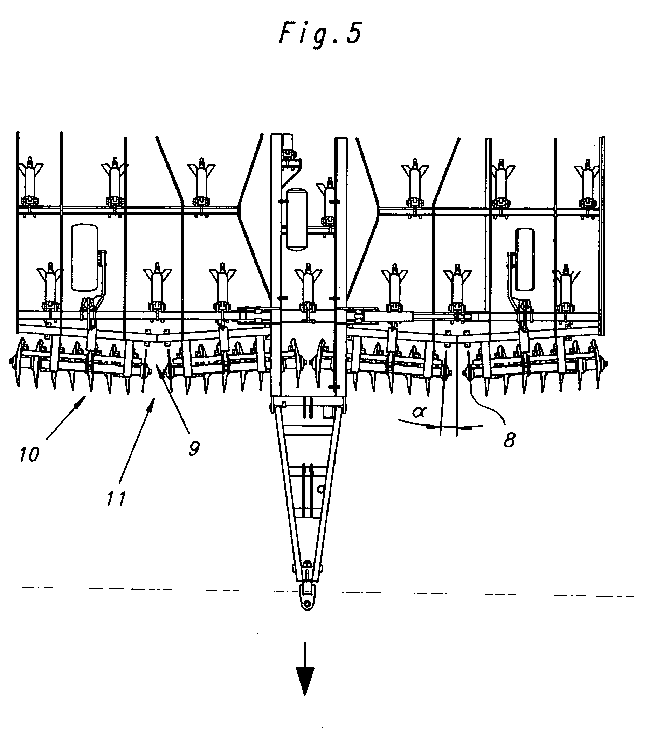

Die W-förmige Anordnung der Scheibensätze **10** besteht aus zwei nebeneinandergesetzten V-förmigen Scheibensätzen **11,** **Fig. 5****.**

Am vorderen Zinkenbalken **16** ist zwischen den beiden V-förmig angeordneten Scheibensätzen ein Zinken **2** angebracht.

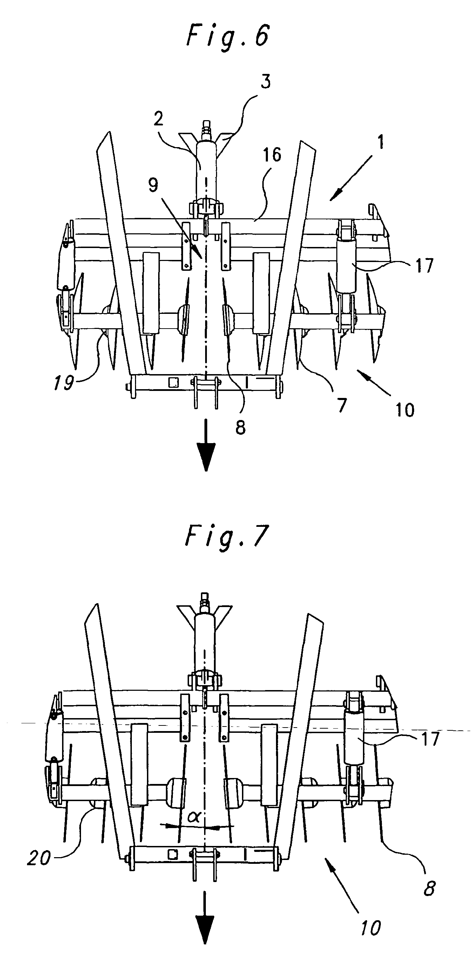

Die einzeln gelagerten Scheibenelemente **19**, **20** sind vor dem vorderen Zinkenbalken **16** an einem parallel beabstandeten Scheibenträger **18** angebracht., **Fig. 6**. Bei dieser Anordnung ist es vorteilhaft, daß sich der zusammenwerfende Bereich **9** mit den Sechscheibenelementen **20** mittig in Fahrtrichtung unter dem Rahmen **1** befindet und daß am vorderen Zinkenbalken **16** mittig hinter dem zusammenwerfenden Bereich **9** ein Zinken **2** angeordnet ist. Der vorlaufende Scheibensatz **10** mit einzeln gelagerten Scheibenelementen **19**, **20** besteht aus jeweils einem linkswerfenden bzw. rechtswerfenden Sechscheibenelement **20** sowie aus einer Anzahl parallel beabstandeter Hohlscheibenelemente **19.** Die einzeln gelagerten Scheibenelemente **19, 20** sind in einem festen oder verstellbaren Anstellwinkel α zur Fahrtrichtung angeordnet.

In **Fig. 7** ist die Anordnung der Sechscheiben **8** im vorlaufenden Scheibensatz **10** wiedergegeben. Die Sechscheibenelemente **20** mit den Sechscheiben **8** sind einzeln gelagert am Scheibenträger **18** angebracht, so daß die Möglichkeit besteht, winkelverstellbare Sechscheibenelemente **20** anzubringen. Denkbar ist auch ein Scheibensatz **10** mit Sechscheiben **8,** welcher in einem Winkel α vorlaufend angordnet ist.

### Bezugszeichenliste

- 1: Rahmen
- 2: Zinken
- 3: Gänsefußschar
- 4: Einebnungselemente
- 5: Hohlscheibe
- 6: Walze
- 7: Hohlscheibe
- 8: Sechscheibe
- 9: zusammenwerfender Bereich
- 10: Scheibensatz
- 11: V-förmige Anordnung
- 12: Deichsel
- 13: Fahrwerk
- 14: Stützrad
- 15: Hydraulikzylinder
- 16: vorderer Zinkenbalken
- 17: Stellzylinder
- 18: Scheibenträger
- 19: Hohlscheibenelemente
- 20: Sechscheibenelement

- α: Anstellwinkel

## Patentansprüche

1. Bodenbearbeitungsgerät, dessen Rahmen **(1)** eine oder mehrere Reihen Zinken **(2)** aufweist, welche vorzugsweise mit schnell auswechselbaren Gänsefußscharen **(3)** bestückt sind und hinter der letzten Zinkenreihe höhenverstellbare Einebnungselemente **(4),** vorzugsweise versetzt angeordnete Hohlscheiben **(5)** und ein oder mehrere höhenverstellbare Walzen **(6)** angebracht sind, **dadurch gekennzeichnet, daß** vor der ersten Zinkenreihe vorlaufend eine Reihe höhenverstellbarer, V- oder W-förmig je nach Arbeitsbreite auf Griff stehende Hohlscheiben **(7)** angeordnet sind, wobei im zusammenwerfenden Bereich **(9)** der Scheiben gerade, nicht gewölbte Sechscheiben **(8)** angebracht sind und vorzugsweise in der ersten Zinkenreihe zwischen den Sechscheiben **(8)** ein Zinken **(2)** angeordnet ist und daß die Hohlscheiben **(7)** und jeweils eine Sechscheibe **(8)** zu einem Scheibensatz **(10)** zusammengefügt sind.

2. Bodenbearbeitungsgerät nach Anspruch 1, **dadurch gekennzeichnet, daß** die maximale Arbeitsbreite des in einem Winkel α angeordneten Scheibensatzes **(10)** vorzugsweise ca. 1,50 m beträgt.

3. Bodenbearbeitungsgerät nach Anspruch 1, **dadurch gekennzeichnet, daß** die vorlaufenden Scheibensätze **(10)** mit den Hohlscheiben **(7)** und der Sechscheibe **(8)** zentral in der Höhe verstellbar sind.

4. Bodenbearbeitungsgerät nach einem oder mehreren der vorgenannten Ansprüche, **dadurch gekennzeichnet, daß** die Hohlscheibenelemente **(19)** mit Hohlscheibe **(7)** und die Sechscheibenelemente **(20)** mit Sechscheibe **(8)** einzeln gelagert vor der ersten Zinkenreihe angeordnet sind.

5. Bodenbearbeitungsgerät nach einem oder mehreren der vorgenannten Ansprüche, **dadurch gekennzeichnet, daß** die Scheibensätze **(10)** mit Sechscheiben **(8)** bestückt sind.

## Claims

1. Soil cultivation device, the frame (1) of which has one or more rows of prongs (2), which are preferably fitted with rapidly replaceable duckfoot shares (3), and attached behind the last row of prongs there are height-adjustable levelling elements (4), hollow discs (5) preferably arranged offset, and one or more height-adjustable rollers (6),
**characterized in that**
there is arranged in advance of the first row of prongs a row of height-adjustable hollow discs (7), V-or W-shaped depending on the working width, standing on end, wherein straight, non-curved coulter discs (8) are attached in the mixing region (9) of the discs, and one prong (2) is preferably arranged in the first row of prongs between the coulter discs (8), and that the hollow discs (7) and respectively one coulter disc (8) are joined together to form a disc set (10).

2. The soil cultivation device according to Claim 1,
**characterized in that**
the maximum working width of the disc set (10) arranged at an angle α is preferably approx. 1.50m.

3. The soil cultivation device according to Claim 1,
**characterized in that**
the advanced disc sets (10) with the hollow discs (7) and the coulter disc (8) are centrally adjustable in height.

4. The soil cultivation device according to one or more of the aforementioned Claims,
**characterized in that**
the hollow disc elements (19) with hollow disc (7) and the coulter disc elements (20) with coulter disc (8) are individually mounted in front of the first row of prongs.

5. The soil cultivation device according to one or more of the aforementioned Claims,
**characterized in that**
the disc sets (10) are fitted with coulter discs (8).

## Revendications

1. Engin de travail du sol, dont le cadre (1) comporte une ou plusieurs rangées de dents (2), qui sont équipées de préférence de socs en patte d'oie (3) à remplacement rapide et des éléments de nivellement (4) réglables en hauteur, de préférence des disques à double enveloppe (5) en disposition de préférence déportée et un ou plusieurs rouleaux (6) réglables en hauteur sont montés derrière la dernière rangée de fourches, **caractérisé en ce qu'**il est disposé en forme de V ou en forme de W, en fonction de la largeur de travail, à l'avant de la première rangée de dents en avancement une rangée de disques à double enveloppe (7) réglables en hauteur, posés sur un manche, des disques de coutre (8) rectilignes, non bombés étant disposés dans la région de réunion en bloc (9) des disques et une dent (2) étant disposée de préférence dans la première rangée de dents entre les disques de coutre (8) et **en ce que** les disques à double enveloppe (7) et chaque fois un disque de coutre (8) sont réunis en un jeu de disques (10).

2. Engin de travail du sol selon la revendication 1, **caractérisé en ce que** la largeur de travail maximale du jeu de disques (10) disposé sous un angle α est de préférence d'environ 1,50 m.

3. Engin de travail du sol selon la revendication 1, **caractérisé en ce que** les jeux de disques (10) en avancement sont réglable dans leur hauteur au niveau central, avec les disques à double enveloppe (7) et les disques de coutre (8).

4. Engin de travail du sol selon l'une quelconque ou plusieurs des revendications précédentes, **caractérisé en ce que** les éléments des disques à double enveloppe (19) avec disque à double enveloppe (7) et les éléments de disques de coutre (20) avec disque de coutre (8) sont disposés sur un logement individuel à l'avant de la première rangée de dents.

5. Engin de travail du sol selon l'une quelconque ou plusieurs des revendications précédentes, **caractérisé en ce que** les jeux de disques (10) sont équipés de disques de coutre (8).
